# EUROPÄISCHE PATENTSCHRIFT

(11) **EP 0 784 395 B1**
(45) Veröffentlichungstag und Bekanntmachung des Hinweises auf die Patenterteilung: **30.06.2004**
(21) Anmeldenummer: 97100190.4
(22) Anmeldetag: 08.01.1997
(51) Int. Cl.: H04M 1/60, H04M 1/72

(54) **Mobiles Fernsprechendgerät**
Mobile telephone
Téléphone mobile

(30) Priorität: 12.01.1996 DE 19600965
(43) Veröffentlichungstag der Anmeldung: 16.07.1997
(73) Patentinhaber: Infineon Technologies AG, 81669 München (DE)
(72) Erfinder: Degenhardt, Achim, 82110 Germering (DE)
(74) Vertreter: Graf Lambsdorff, Matthias, Dr.

(56) Entgegenhaltungen:
- EP-A- 0 559 957
- EP-A- 0 642 230
- DE-A- 4 415 952

## Beschreibung

Die Erfindung betrifft ein mobiles Fernsprechendgerät bzw. ein mobiles Fernsprechsystem gemäß dem Oberbegriff des Anspruchs 1 bzw. des Anspruchs 2.

Mobile Fernsprechendgeräte, insbesondere Schnurlostelefone nach dem DECT (Digital European Cordless Telecommunication)-Standard gibt es schon seit einigen Jahren auf dem Markt. Derartige Telefone sind mit den verschiedensten Funktionen ausgerüstet. So sind z.B. Schnurlostelefone bekannt, welche eine Basisstation mit normaler Telefoneinheit sowie einer zusätzlichen mobilen Einheit aufweisen. Für die Funktion des Freisprechens ist nur die Basisstation mit der darin integrierten Telefoneinheit verwendbar. Aus Kostengründen ist eine Funktion des Freisprechens bisher im mobilen Schnurlostelefon nach dem DECT-Standard nicht implementiert worden.

In der Druckschrift EP-A-0 642 230 wird ein Fernsprechsystem mit einem mobilen Fernsprechendgerät enthaltend eine Signalverarbeitungseinheit beschrieben, die über eine Verstärkungseinheit mit einem Mikrofon und einem Lautsprecher gekoppelt ist. Eine stationäre Basisstation dient zur Kommunikation mit dem mobilen Fernsprechendgerät und die stationäre Basisstation weist einen digitalen Signalprozessor mit zugehörigem Speicher auf. Es ist vorgesehen, dass das mobile Fernsprechendgerät eine Freisprechfunktion aufweisen kann, wobei das mobile Fernsprechendgerät zu diesem Zweck einen zusätzlichen Lautsprecher und ein zusätzliches Mikrofon aufweist.

Aufgabe der vorliegenden Erfindung ist es daher, ein mobiles Fernsprechendgerät, insbesondere ein Schnurlostelefon nach dem DECT-Standard, mit einer Freisprechfunktion auszurüsten.

Diese Aufgabe wird durch den kennzeichnenden Teil des Anspruchs 1 bzw. 2 gelöst. Weiterbildungen sind Kennzeichen der Unteransprüche.

Vorteil der vorliegenden Erfindung ist es, daß der bereits in einem mobilen Fernsprechendgerät vorhandene digitale Signalprozessor dazu verwendet wird, eine Freisprechfunktion zu ermöglichen. In den meisten Fällen muß dabei keine zusätzliche Hardware im Telefon untergebracht werden.

Sollte die Speicherkapazität des im Mobilteil vorgesehenen Signalprozessors nicht ausreichen um eine Freisprecheinrichtung zu realisieren, so kann in einer zweiten Ausführungsform auch der digitale Signalprozessor in der stationären Einheit zur Realisierung dieser Funktion herangezogen werden.

Ein weiterer Vorteil besteht darin, daß im letztgenannten Beispiel mehrere mit der Basisstation koppelbare mobile Fernsprechendgeräte auf einfache Weise mit einer Freisprechfunktion versehen werden können.

Da die Freisprechfunktion vorteilhafterweise nach dem Waageverfahren ausgeführt wird, können bisherige Funktionen wie z.B. die Echosupressor-Funktion oder die Echokompensations-Funktion des digitalen Signalprozessors stark reduziert bzw. während des Freisprechens ausgeschaltet werden, so daß eine ausreichende Rechenkapazität für die Funktion des Freisprechens zur Verfügung steht.

Die Erfindung wird nachfolgend anhand von zwei Figuren näher erläutert.

Es zeigen
- Figur 1: ein Blockschaltbild eines mobilen Fernsprechendgerätes, und
- Figur 2: ein Blockschaltbild eines Fernsprechsystems mit mobilem Fernsprechendgerät.

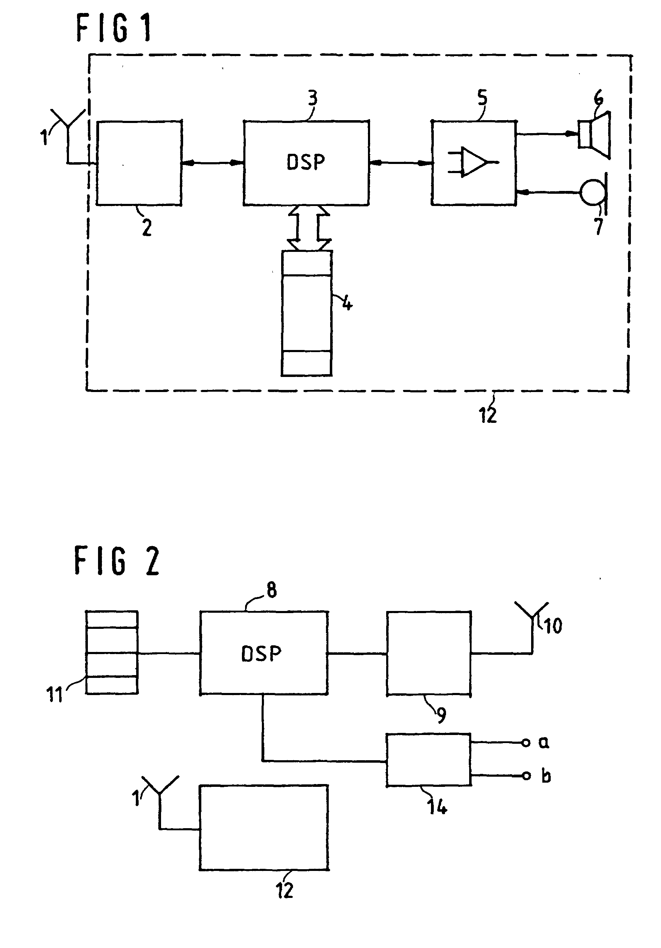

In dem in Figur 1 dargestellten Blockschaltbild ist mit 1 eine Sendeempfangsantenne dargestellt, die mit einer Sende-Empfangseinheit 2 verbunden ist. Die von dieser Einheit 2 empfangenen und zu sendenden Signale werden über eine Verbindung an einen digitalen Signalprozessor 3 übertragen. Dieser weist unter anderem ein mit ihm gekoppelten Programmspeicher 4 auf, welcher diverse Programme für verschiedene Funktionen enthält. Des weiteren ist der digitale Signalprozessor 3 mit einer Verstärkereinheit 5 gekoppelt, welche einen Digital-Analog-Wandler, Analog-Digital-Wandler sowie zugehörige Verstärker in bekannter Weise enthält. Die analogen Ausgangssignale werden dann an einen Lautsprecher 6 und die analogen Eigangssignale über ein Mikrofon 7 übertragen. Die gesamte Einheit stellt ein Mobilteil 12 dar.

In Figur 2 ist vereinfacht die stationäre Station symbolisch durch einen digitalen Signalprozessor 8, einen damit gekoppelten Sende-Empfangsverstärker 9 und einer daran angeschlossenen Antenne 10 dargestellt. Mit 14 ist eine Leitungsanschaltung bezeichnet, die einerseits mit dem Signalprozessor 8 und andererseits mit einer Zweidrahtleitung a, b gekoppelt ist. Das mobile Fernsprechendgerät ist mit 12 bezeichnet, in welches eine Antenne 1 integriert ist.

Üblicherweise ist bei einer Freisprechfunktion zusätzlich eine sogenannte Lauthörfunktion mitintegriert. Diese würde einen zweiten Lautsprecher erforderlich machen. In dem Lauthörbetrieb würde dann aus einem separaten Lautsprecher das Empfangssignal zusätzlich ausgegeben werden. Eine derartige zum Freisprechen zusätzliche Funktion wäre jedoch in einem mobilen Fernsprechendgerät nicht sinnvoll, wenn sie mit dem direkt am Ohr liegenden Lautsprecher realisiert wird. Des weiteren ist es aus Platzgründen nicht unbedingt praktikabel im Mobilteil einen zweiten Lautsprecher zu integrieren. Jedoch wäre eine Unterbringung eines zweiten Lautsprechers in einem geeigneten Mobilteil denkbar.

Um ein Freisprechen über ein mobiles Fernsprechendgerät zu ermöglichen, muß die analoge Anschaltung in dem mobilen Fernsprechendgerät in der Lage sein, einen Lautsprecher mit einer genügend großen Leistung zu betreiben. Die Mikrofonverstärkung muß gegenüber dem Normalbetrieb vergrößert werden. Für das Freisprechen wird somit der im mobilen Fernsprechendgerät bereits vorhandene Lautsprecher und das bereits vorhandene Mikrofon benutzt. Die Verstärkereinheit 5 muß dementsprechend ausgelegt werden, um den Anforderungen des Freisprechbetriebs zu genügen. Im Freisprechbetrieb wird das Telefon dann z.B. auf einen Tisch gelegt.

Der eigentliche Freisprechalgorithmus wird vollständig in den Speicher 4 der Mobileinheit bzw. im Speicher 11 der stationären Einheit implementiert. Dieser Signalprozessor ist in der Regel in jedem DECT-Telefon sowohl in der Basisstation als auch in jedem Mobilteil enthalten. Das Freisprechen kann daher entweder in der Mobilstation oder in der Basisstation realisiert werden.

In dem in Figur 1 gezeigten Blockschaltbild wird das Freisprechen im Mobilteil realisiert. Dazu müßte der in dem Mobilteil befindliche Signalprozessor 3 einen Freisprechalgorithmus in seinem Programmspeicher 4 zusätzlich abarbeiten. Das für das Freisprechen benötigte RAM (in der Figur nicht dargestellt), als auch die benötigte Rechenleistung müßte daher in dem Mobilteil 12 bereitgestellt werden. Sollte die Rechenleistung des darin enthaltenen Signalprozessors entsprechend groß sein und entsprechend Speicherplatz im Programmspeicher und im RAM vorhanden sein, so kann die Freisprechfunktion erfindungsgemäß mittels dieses Signalsprozessors 3 realisiert werden.

Ist dies jedoch nicht der Fall, so ist eine erfindungsgemäße Realisation des Freisprechens mittels des in der Basisstation vorhandenen Signalprozessors 8 gemäß Figur 2 von Vorteil. Ein weiterer Vorteil gegenüber der ersten Lösung besteht darin, daß durch diese Maßnahme kein erhöhter Stromverbrauch im Mobilteil zustande kommt. Außerdem kann eine DECT-Basisstation bis zu 12 Kanäle bearbeiten. Somit liegt z.B. die Anzahl der Mobilteile um ein Vielfaches über der Anzahl der Basisstationen. Es macht daher insbesondere Sinn, das Freisprechen erfindungsgemäß in der Basisstation zu implementieren. Maximal muß hier für jedes externe Mobilteil 12 ein Freisprechalgorithmus vorgesehen werden.

Die Realisierung des Freisprechens erfolgt nach einem auf dem Waageverfahren basierenden Algorithmus. Dieser benötigt in der Regel in der Basisstation weder zusätzliche Rechenleistung, noch mehr RAM, da laut DECT-Standard für jeden externen Anschluß ein Echosupressor und bei analogen Anschlüssen, auch ein Echokompensator bereitgestellt werden muß. Wie nachfolgend gezeigt wird, kann der Echosupressor im Freisprechbetrieb auch ausgeschaltet werden. Die benötigte Rechenleistung für den Echokompensator kann im Freisprechbetrieb ebenfalls reduziert werden. Gegebenenfalls kann der Echokompensator sogar ebenfalls ausgeschaltet werden. Die so frei werdende Rechenleistung und der frei werdende Datenspeicher können dann für die Freisprechfunktion benutzt werden. In der Regel wird daher für den Freisprechbetrieb weder mehr Rechenleistung, noch mehr RAM benötigt. Lediglich der Programmspeicher 11 muß für den Freisprechalgorithmus ausgebaut werden. Das Freisprechen kann daher zu sehr geringen Mehrkosten angeboten werden.

Bei einem Telefon nach dem DECT-Standard beträgt die Signallaufzeit zwischen dem Mikrofon 7 und der Leitungsanschaltung 14 mehr als 10 ms. Das gleiche gilt für die Empfangsrichtung, d.h. die Signallaufzeit zwischen der Leitungsanschaltung 14 und dem Lautsprecher 6 in dem Mobilteil beträgt ebenfalls mehr als 10 ms. Der Grund dafür liegt an dem Zeitmultiplexverfahren, das für die Funkübertragung zwischen der Basisstätion und der Mobilstation verwendet wird. Die Leitungsanschaltung 14 ist in der Regel nicht ideal, d.h. das Sendesignal wird, um eine sogenannte Gabel-Übergangsdämpfung, gedämpft in dem Empfangskanal eingekoppelt. Das in der Leitungsanschaltung 14 rückgekoppelte Signal wird als Echo wahrgenommen. Die Sprachsignale, die in das Mikrofon 7 des Mobilteils 12 aufgenommen werden, gelangen mit etwa 20 ms Verzögerung zu dem Lautsprecher 6 zurück. In der Praxis hat sich gezeigt, daß ein Rückhören mit ca. 20 ms als sehr störend empfunden wird. Nach dem DECT-Standard muß daher die Basisstation das Echo der Leitungsanschaltung 14 kompensieren.

Um auch die Echos, die innerhalb des Telefonnetzes enstehen, zu bedämpfen, ist nach dem DECT-Standard ein Echosupressor vorgesehen. Dieser Echosupressor bedämpft immer dann das empfangene Signal, wenn in Senderichtung gesprochen wird. Durch den Echosupressor können Echos von bis zu einer Laufzeit von 70 ms bedämpft werden.

Der DECT-Standard schreibt vor, daß das Sendesignal minimal um 33 dB gedämpft zurückgeführt werden darf, d.h. die Echodämpfung, gemessen zwischen Mikrofon 7 und Lautsprecher 6 des Mobilteils 12, muß größer als 33 dB sein. Da der Echosupressor das Echo ebenfalls bedämpft, kann die Echodämpfung, die der Echokompensator realisiert, entsprechend kleiner sein. Die zulässige Dämpfung für den Echosupressor liegt zwischen 9 und 12 dB. Der Echokompensator muß daher eine Echodämpfung von mindestens 21 bis 24 dB sicherstellen. Dieser Wert muß um die Gabelübergangsdämpfung der Leitungsanschaltung (typisch 6 bis 18 dB) und die im System vorhandenen Verstärkungs- und Dämpfungseinstellungen (Mikrofonverstärkung, Lautsprecherverstärkung, Sende- und Empfangsverstärkung der Leitungsanschaltung, Verstärkungen und Dämpfungen innerhalb der Signalverarbeitung) korrigiert werden. Je nach Ländervorschrift und Art der Leitungsanschaltung 14 muß der Echokompensator 20 bis 30 dB zusätzliche Echodämpfung realisieren. Die im Telefonsystem auftretenden Fernechos werden nur durch den Echosupressor um 9 bis 12 dB bedämpft.

Ein erfindungsgemäßes Freisprechsystem, das nach dem Wageverfahren arbeitet, fügt entweder in Senderichtung oder in Empfangsrichtung eine definierte Dämpfung ein. Häufig gibt es noch einen sogenannten Idlezustand, bei dem in jeder Richtung die halbe Dämfpung eingefügt wird. Generell gilt, daß die Summe der eingefügten Dämpfungen ("Hub") konstant ist. Die eingefügte Dämpfung soll zum einen die Stabilität des gesamten Systems sicherstellen und zum anderen das akustische Echo, das durch die Lautsprecher-Mikrofonkoppelung entsteht, dämpfen. Durch die Dämpfung des akustischen Echos soll erreicht werden, daß der entferntere Teilnehmer das akustische Echo nicht wahrnehmen kann. Typischerweise beträgt die Summe der Dämpfungen ("Hub") ca. 40 dB.

Die Dämpfungsglieder des Freisprechens bedämpfen nicht nur das akustische Echo, sondern auch das Rückhören, d.h. das Echo, das durch die Leitungsanschaltung 14 entsteht. Die Funktion des Echosupressors wird daher im Fall eines Freisprechens nicht mehr benötigt. Der Echosupressor würde sogar das Freisprechen verschlechtern, da gegebenenfalls die Dämpfung des Echokompensators bei durchgeschaltetem Empfangskanal, aktiv sein kann. Der Echosupressor sollte daher bei eingeschaltetem Freisprechen abgeschaltet sein.

Der Echokompensator, der das Echo der Leitungsanschaltung kompensiert, wird das Freisprechen unterstützen, da der Echokompensator aus der Empfangssignal das Sendesignal weitgehend entfernt. Ist die Senderichtung durchgeschaltet, kann somit leichter entschieden werden, welcher von beiden Teilnehmern spricht.

Aufgrund der relativ hohen Dämpfung des Freisprechens, muß der Echokompensator nicht die gleiche Echodämpfung erreichen, wie bei einem Betrieb ohne Freisprechen, um die DECT-Anforderungen zu erfüllen. Auch das Freisprechen selber benötigt nicht unbedingt einen Echokompensator, der das Leitungsecho nahezu vollständig unterdrückt, d.h. die Anforderungen an den Echokompensator kann im Fall von Freisprechen reduziert werden. Gegebenenfalls kann der Echokompensator sogar ganz ausgeschaltet werden. Auch ohne die Verwendung des Echokompensators kann ein extellentes Freisprechen ermöglicht werden.

Um das Leitungsecho möglichst auch während einem sogenannten "Double-Talk", also wenn beide Teilnehmer gleichzeitig sprechen, unterdrücken zu können, werden häufig zwei Echokompensatoren, realisiert durch FIR-Filter, eingesetzt. Der eine der beiden Echokompensatoren versucht ständig die Leitungsanschaltung nachzubilden. Dieser Echokompensator arbeitet aber im Hintergrund, d.h. beeinflußt nicht das Signal des Sendeund Empfangspfads. Die Subtraktion des Echos realisiert ausschließlich der zweite Echokompensator. Dieser zweite Echokompensator ist aber nicht adaptiv. Er erhält die Koeffizienten von den im Hintergrund laufenden Echokompensator. Die Koeffizienten werden immer dann kopiert, wenn der Hintergrundechokompensator eine gute Adaption an die Leitungsanschaltung gefunden hat. Ist die Adaption des Hintergrundkompensators, z.B. aufgrund von "Double-Talk", schlecht, werden die Koeffizienten nicht kopiert. Mit einem Echokompensator, der nach diesem Verfahren arbeitet, kann eine hohe Echodämpfung erzielt werden. Im Fall von Freisprechen ist aber eine so hohe Echodämpfung nicht gefordert. Man könnte z.B. den nicht adaptiven Echokompensator ausschalten und den adaptiven Echokompensator in den Vordergrund schalten. Dieser reduzierte Echokompensator kann sicherlich während einem "Double-Talk" nicht die gleich guten Echodämpfungen erzielen, dies ist aber auch nicht nötig, da die Dämpfung des Waageverfahrens die fehlende Dämpfung zufügt. Durch die Aufwandsreduzierung des Echokompensators wird weniger RAM und Rechenleistung für die Echokompensation benötigt.

Erfindungsgemäß wird demnach das Freisprechen durch Implementieren des Waageverfahrens und durch Abschalten des Echosupressors und Reduktion bis hin zum Abschalten des Echokompensators realisiert. Die so gewonnenen Resourcen an Rechenleistung und Datenspeicher kann für das Freisprechen genutzt werden. Der für das Freisprechen benötigte zusätzliche Datenspeicher und die zusätzliche Rechenleistung ist daher minimal. Die Anforderungen des DECT-Standards werden auch weiterhin eingehalten, da das Freisprechen das Echo, das durch die Leitungsanschaltung entsteht, um den eingestellten Hub bedämpft. Gerade bei DECT-Geräten mit einer sehr guten Echokompensation, kann die Freisprechfunktion nach dem Waageverfahren ohne Mehraufwand angeboten werden, da der Aufwand der Echokompensation reduziert werden kann.

Ein in der Basisstation implementiertes Freisprechen muß berücksichtigen, daß das akustische Echosystem bedingt um 20 ms zusätzlich verzögert wird. Enthält der Freisprechalgorithmus z.B. einen Komparator, der die Energie des Sende- und Empfangssignals miteinander vergleicht um ein sogenanntes Übersprechen zu ermöglichen, bzw. der ein sogenanntes Selbstumschalten des Freisprechens verhindern soll, muß der Komparator die zusätzliche Laufzeit berücksichtigen. Ist genug Datenspeicher vorhanden, kann das Empfangssignal, d.h. das Signal von der Leitungsanschaltung, um bis zu 20 ms verzögert zu dem Komparator, der die akustische Seite kontrolliert, zugeführt werden. Durch die dem Komparator vorgeschaltete Verzögerung wird erreicht, daß der Komparator nur die Akustik zwischen dem Lautsprecher und dem Mikrofon im Mobilteil berücksichtigen muß. Dadurch ist das Gegensprechverhalten des Freisprechens nicht schlechter als in herkömmlichen Telefonen. Für eine Verzögerung von 20 ms werden bis zu 160 RAM-Speicherzellen benötigt. Steht weniger Datenspeicher zur Verfügung, kann wenigstens ein Teil der Verzögerung realisiert werden.

Bei DECT-Geräten, die an ein ISDN-Netz angeschlossen werden, wird kein Echokompensator benötigt. Der Freisprechalgorithmus kann daher bei ISDN-Telefonen lediglich die Resourcen des Echosupressors benutzen. Die Ersparnis an Rechenleistung und Datenspeicher entfällt entsprechend geringer aus.

Wird ein Freisprechalgorithmus implementiert, der nicht nach dem Waageverfahren arbeitet, sondern wird das akustische Echo, das durch die Koppelung zwischen Lautsprecher und Mikrofon in dem Mobilteil entsteht, mit Hilfe eines Echokompensators kompensiert, wird auch weiterhin der Echokompensator für die Leitungsanschaltung und der Echosupressor benötigt. Der Grund dafür ist, daß das Echo, das durch die Leitungsanschaltung entsteht, von dem akustischen Echokompensator nicht beeinflußt wird.

## Patentansprüche

1. Mobiles Fernsprechendgerät mit einer Signalverarbeitungseinheit, die über eine Verstärkungseinheit (5) mit einem Mikrofon (7) und wenigstens einem Lautsprecher (6) gekoppelt ist, wobei die Signalverarbeitungseinheit einen digitalen Signalprozessor mit zugehörigem Speicher aufweist,
**dadurch gekennzeichnet , daß**
- die Verstärkungseinheit (5) zum Betrieb einer Freisprechfunktion ausgelegt ist und mittels des digitalen Signalprozessors (3, 8) die Freisprechfunktion realisiert wird.

2. Fernsprechsystem mit einem mobilen Fernsprechendgerät mit einer Signalverarbeitungseinheit, die über eine Verstärkungseinheit (5) mit einem Mikrofon (7) und wenigstens einem Lautsprecher (6) gekoppelt ist, sowie mit einer stationären Basisstation, die zur Kommunikation mit dem mobilen Fernsprechendgerät dient, wobei die stationäre Basisstation einen digitalen Signalprozessor (3, 8) mit zugehörigem Speicher aufweist,
**dadurch gekennzeichnet, daß**
- die Verstärkungseinheit (5) zum Betrieb einer Freisprechfunktion ausgelegt ist und der digitale Signalprozessor (3, 8) eine Freisprechfunktion für das mobile Fernsprechendgerät realisiert.

3. Mobiles Fernsprechendgerät nach Anspruch 1,
**dadurch gekennzeichnet, daß** ein zusätzlicher Lautsprecher für die Freisprechfunktion vorgesehen ist.

4. Mobiles Fernsprechsystem nach Anspruch 2,
**dadurch gekennzeichnet, daß** die Freisprechfunktion nach dem Waageverfahren realisiert wird.

5. Mobiles Fernsprechsystem nach Anspruch 4,
**dadurch gekennzeichnet, daß** eine vorhandene Echosupressorfunktion des digitalen Signalprozessors (3, 8) bei der Freisprechfunktion reduziert bzw. ausgeschaltet wird.

6. Mobiles Fernsprechsystem nach Anspruch 4 oder 5,
**dadurch gekennzeichnet, daß** im Freisprechbetrieb der digitale Signalprozessor (3, 8) die Funktion der Echokompensation reduziert.

7. Mobiles Fernsprechsystem nach Anspruch 2,
**dadurch gekennzeichnet, daß** der Freisprechalgorithmus mittels des durch den digitalen Signalprozessor implementierten Echokompensators und/oder Echosupressors realisiert wird.

## Claims

1. Mobile telephone terminal having a signal processing unit which is coupled via an amplification unit (5) to a microphone (7) and to at least one loudspeaker (6), with the signal processing unit having a digital signal processor with an associated memory,
**characterized in that**
- the amplification unit (5) is designed for operation of a hands-free function, and the hands-free function is provided by means of the digital signal processor (3, 8).

2. Telephone system having a mobile telephone terminal with a signal processing unit, which is coupled via an amplification unit (5) to a microphone (7) and to at least one loudspeaker (6), and having a stationary base station which is used for communication with the mobile telephone terminal, with the stationary base station having a digital signal processor (3, 8) with an associated memory,
**characterized in that**
- the amplification unit (5) is designed for operation of a hands-free function, and the digital signal processor (3, 8) provides a hands-free function for the mobile telephone terminal.

3. Mobile telephone terminal according to Claim 1, **characterized in that** an additional loudspeaker is provided for the hands-free function.

4. Mobile telephone system according to Claim 2, **characterized in that** the hands-free function is provided on the basis of the balance method.

5. Mobile telephone system according to Claim 4, **characterized in that** an echo suppressor function which is provided for the digital signal processor (3, 8) is reduced or switched off for the hands-free function.

6. Mobile telephone system according to Claim 4 or 5, **characterized in that**, in the hands-free mode, the digital signal processor (3, 8) reduces the function of the echo compensation.

7. Mobile telephone system according to Claim 2, **characterized in that** the hands-free algorithm is provided by means of the echo compensator and/or echo suppressor that is implemented by the digital signal processor.

## Revendications

1. Terminal téléphonique mobile comportant une unité de traitement des signaux, qui est couplée par l'intermédiaire d'une unité (5) d'amplification à un microphone (7) et à au moins un haut-parleur (6), l'unité de traitement des signaux comportant un processeur de signaux numériques à mémoire associée,
**caractérisé en ce que**
- l'unité (5) d'amplification est conçue pour le fonctionnement d'une fonction de conversation main libre et la fonction de conversation main libre est réalisée au moyen du processeur (3, 8) de signaux numériques.

2. Système téléphonique comportant un terminal téléphonique mobile ayant une unité de traitement de signaux qui est couplée par l'intermédiaire d'une unité (5) d'amplification à un microphone (7) et à au moins un haut-parleur (6), ainsi qu'un poste de base fixe qui sert à la communication avec le terminal téléphonique mobile, le poste de base fixe comportant un processeur (3, 8) de signaux numériques à mémoire associée,
**caractérisé en ce que**
- l'unité (5) d'amplification est conçue pour le fonctionnement d'une fonction de conversation main libre et le processeur (3, 8) de signaux numériques réalise une fonction de conversation main libre pour le terminal téléphonique mobile.

3. Terminal téléphonique mobile suivant la revendication 1, **caractérisé en ce qu'**il est prévu un haut-parleur supplémentaire pour la fonction de conversation main libre.

4. Système téléphonique mobile suivant la revendication 2, **caractérisé en ce que** la fonction de conversation main libre est réalisée suivant le procédé de balance.

5. Système téléphonique mobile suivant la revendication 4, **caractérisé en ce qu'**une fonction de suppression d'écho qui est présente du processeur (3, 8) de signaux numériques est réduite ou déconnectée lors de la fonction de conversation main libre.

6. Système téléphonique mobile suivant la revendication 4 ou 5, **caractérisé en ce que** la fonction de la compensation d'écho est réduite au cours du fonctionnement en conversation main libre du processeur (3, 8) de signaux numériques.

7. Système téléphonique mobile suivant la revendication 2, **caractérisé en ce que** l'algorithme de conversation main libre est réalisé au moyen du compensateur d'écho et/ou du suppresseur d'écho mis en oeuvre par le processeur de signaux numériques.
